# EUROPEAN PATENT SPECIFICATION

(11) **EP 3 059 786 B1**
(45) Date of publication and mention of the grant of the patent: **06.12.2017**
(21) Application number: 14853662.6
(22) Date of filing: 01.10.2014
(51) Int. Cl.: H01M 4/136, H01M 4/38, H01M 4/58, H01M 4/62, H01M 10/054, H01M 10/0562

(54) **POSITIVE ELECTRODE MIXTURE AND ALL-SOLID-STATE SODIUM-SULFUR BATTERY**
POSITIVELEKTRODENMISCHUNG UND NATRIUM-SCHWEFEL-FESTKÖRPERBATTERIE
MÉLANGE D'ÉLECTRODE POSITIVE ET CELLULE AU SODIUM-SOUFRE À L'ÉTAT SOLIDE

(30) Priority: 16.10.2013 JP 2013215658
(43) Date of publication of application: 24.08.2016
(73) Proprietor: Nagase ChemteX Corporation, Osaka-shi Osaka 550-8668 (JP)
(72) Inventor: NAGATA Hiroshi, Tatsuno-shi Hyogo 679-4124 (JP); CHIKUSA Yasuo, Tatsuno-shi Hyogo 679-4124 (JP)
(74) Representative: Hoffmann Eitle
(86) International application number: PCT/JP2014/076244
(87) International publication number: WO 2015/056565

(56) References cited:
- WO-A1-2012/086196
- WO-A1-2013/015321
- WO-A1-2013/076955
- JP-A- 2013 080 637
- JP-A- 2013 087 002
- JP-B1- 5 445 809
- SETH S. BERBANO ET AL.: 'Formation and structure of Na2S+P2S5 amorphous materials prepared by melt-quenching and mechanical milling' JOURNAL OF NON-CRYSTALLINE SOLIDS vol. 358, pages 93 - 98, XP028330833

## Description

### TECHNICAL FIELD

The present invention relates to a cathode mixture and an all-solid-state sodium-sulfur battery.

### BACKGROUND ART

Sulfur is known to possess a very high theoretical capacity of about 1672 mAh/g, and sulfur batteries in which sulfur is used as a cathode active material have been the subject of active studies. Lithium is often used as an anode active material in sulfur batteries, but there is a need to develop sulfur batteries in which sodium, which is lower cost, is used as an anode active material.

As a sulfur battery using sodium as an anode active material, Patent Literature 1 discloses a sodium-sulfur battery configured to separate molten metallic sodium as an anode active material disposed on one side from molten sulfur as a cathode active material disposed on the other side by a β-alumina solid electrolyte having selective permeability to sodium ions. In the conventional sodium-sulfur battery, however, both the anode active material metallic sodium and the cathode active material sulfur need to be kept molten to allow the charge/discharge reaction to proceed, and there is therefore a problem in that the battery needs to be operated under a high temperature of 300°C to 350°C.

Patent Literatures 2, 3 & 4 describe positive electrode compositions for all-solid lithium secondary batteries comprising elemental sulfur or a sulfur-containing compound as active material, a conductive carbonaceous material having high specific surface area (such as Ketjen black or activated carbon) and a solid electrolyte obtained by mixing lithium sulfide (Li₂S) with phosphorus pentasulfide (P₂S₅) in a molar ratio of 70:30 or higher.

Patent Literature 5 discloses an all-solid-state sodium-sulfur secondary cell comprising a positive electrode with an active material consisting of Na₂Sₓ (with x = 1-8) and a solid electrolyte layer containing an ion-conducting glass ceramics of general formula Na₂S-MₓS_{y} (with M = P, Si, Ge, B or Al; x and y being each an integer giving a stoichiometric ratio depending upon the type of M), wherein Na₂S is contained in an amount of more than 67 %mol. and less than 80 %mol.

The use of ion-conducting materials having a composition of Na₂S-P₂S₅ as solid electrolyte in sodium-sulfur batteries is also described in Patent Literature 6 and Non-Patent Literature 1.

### CITATION LIST

### PATENT LITERATURE

Patent Literature 1: JP H10-270073 A
Patent Literature 2: WO 2013/076955 A1
Patent Literature 3: JP 2013 080637 A
Patent Literature 4: WO 2012/086196 A1
Patent Literature 5: WO 2013/015321 A1
Patent Literature 6: JP 2013 087002 A

### NON-PATENT LITERATURE

Non-Patent Literature 1: Journal of Non-Crystalline Solids, vol. 358 (2012), pages 93-98

### SUMMARY OF INVENTION

### TECHNICAL PROBLEM

The present invention aims to maximize the advantageous physical properties of sulfur and provide a cathode mixture that can be suitably used in a cathode mixture layer of an all-solid-state sodium-sulfur battery in which charge/discharge capacity can be ensured even during operation at normal temperature. The present invention also aims to provide an all-solid-state sodium-sulfur battery including a cathode mixture layer containing the cathode mixture.

### SOLUTION TO PROBLEM

The present inventors made an intensive study on the above problem to obtain the following new findings: a cathode mixture that contains an ion-conductive material (A) containing phosphorus in a specific amount (weight ratio), sulfur and/or its discharge product (B), and a conductive material (C) including a conductive material (C1) with a predetermined specific surface area can be used in a cathode mixture layer of an all-solid-state sodium-sulfur battery (sodium-sulfur battery including an anode, a solid electrolyte layer and a cathode mixture layer all of which are substantially free of liquids) to ensure the charge/discharge capacity of the all-solid-state sodium-sulfur battery even during operation at normal temperature. The cathode mixture of the present invention was completed based on such findings.

The reason why the cathode mixture of the present invention can be used in a cathode mixture layer of an all-solid-state sodium-sulfur battery to ensure charge/discharge capacity even at normal temperature is considered as follows.

In the cathode mixture layer of all-solid-state sodium-sulfur batteries, a reversible reaction represented by the following formula (1) occurs, wherein the reaction towards the right predominantly proceeds during discharge, and the reaction towards the left predominantly proceeds during charge.

S + 2Na⁺ + 2e⁻ ↔ Na₂S (1)

In the all-solid-state sodium-sulfur batteries, since the anode, the solid electrolyte layer, and the cathode mixture layer are substantially free of liquids, and the sulfur contained as a cathode active material in the cathode mixture layer has electrical insulation properties, the cathode mixture layer has very low electron conductivity and very low sodium ion conductivity. Accordingly, the all-solid-state sodium-sulfur batteries exhibit poor reactivity in the reaction shown in the formula (1) during charge and discharge and thus cannot allow the advantageous physical properties of sulfur to be maximized. Therefore, it is basically difficult to ensure a sufficient charge/discharge capacity.

In contrast, in the cathode mixture of the present invention, it is considered that the use of an ion-conductive material (A) containing phosphorus in a specific amount (weight ratio) reduces resistance (reaction resistance) when sulfur, electrons, and sodium ions react with each other at the reaction interface, and the use of a conductive material (C1) having a certain specific surface area as a conductive material (C) increases the number of reaction points between sulfur and/or its discharge product (B) and the conductive material (C) to improve the reactivity of the reaction shown in the formula (1); as a result, the charge/discharge capacity of the all-solid-state sodium-sulfur battery can be ensured even at normal temperature.

The cathode mixture of the present invention is a cathode mixture for use in a cathode mixture layer of an all-solid-state sodium-sulfur battery, the cathode mixture containing the following components (A) to (C):
(A) an ion-conductive material containing phosphorus at a weight ratio of 0.2 to 0.55;
(B) sulfur and/or its discharge product; and
(C) a conductive material,
the component (C) including a conductive material (C1) having a specific surface area of 1000 m²/g or more.

In the cathode mixture of the present invention, the component (A) is preferably PₓS_{y} where x and y independently represent an integer that gives a stoichiometric ratio, and/or a composite of Na, S, and P.

In the cathode mixture of the present invention, the composite of Na, S, and P is preferably obtained by mechanically milling a combination of Na₂S, S, and P or a combination of Na₂S and PₓS_{y} where x and y independently represent an integer that gives a stoichiometric ratio.

In the cathode mixture of the present invention, the component (B) is preferably present in an amount of 40% by weight or more of the total amount of the components (A), (B), and (C) .

In the cathode mixture of the present invention, the composite of Na, S, and P may be obtained by mechanically milling the combination of Na₂S, S, and P or the combination of Na₂S and PₓS_{y}, and further at least one selected from the group consisting of M_{z}S_{w} where M represents Si, Ge, B, or Al, and z and w independently represent an integer that gives a stoichiometric ratio, diphosphorus pentoxide, sodium oxide, and sodium iodide.

In the cathode mixture of the present invention, the component (C) may further include at least one conductive material (C2) selected from the group consisting of graphite, acetylene black, carbon nanotube, and carbon fiber.

The all-solid-state sodium-sulfur battery of the present invention includes: a cathode mixture layer containing the cathode mixture of the present invention; a solid electrolyte layer; an anode; and a current collector.

### ADVANTAGEOUS EFFECTS OF INVENTION

The cathode mixture of the present invention contains an ion-conductive material (A) containing phosphorus in a specific amount (weight ratio), sulfur and/or its discharge product (B), and a conductive material (C) including a conductive material (C1) having a certain specific surface area. If such a cathode mixture is used in a cathode mixture layer of an all-solid-state sodium-sulfur battery, low resistance (reaction resistance) is shown when sulfur, electrons, and sodium ions react with each other at the reaction interface, and the number of reaction points between the sulfur and/or its discharge product (B) and the conductive material (C) is increased. Therefore, the cathode mixture of the present invention makes it possible to provide an all-solid-state sodium-sulfur battery in which charge/discharge characteristics can be ensured even during operation at normal temperature.

Moreover, in the all-solid-state sodium-sulfur battery of the present invention, which includes a cathode mixture layer containing the cathode mixture of the present invention, charge/discharge characteristics can be ensured even during operation at normal temperature.

### BRIEF DESCRIPTION OF DRAWINGS

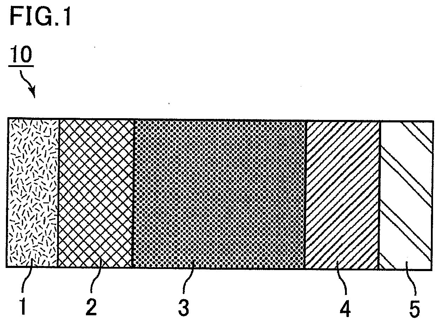

Fig. 1 is a cross-sectional view schematically showing an example of an embodiment of the all-solid-state sodium-sulfur battery of the present invention.

### DESCRIPTION OF EMBODIMENTS

### «Cathode mixture»

First, a description is given on the cathode mixture of the present invention. The cathode mixture of the present invention is characterized as a cathode mixture for use in a cathode mixture layer of an all-solid-state sodium-sulfur battery, which contains an ion-conductive material (A) containing phosphorus in a specific amount (weight ratio), sulfur and/or its discharge product (B), and a conductive material (C) including a conductive material (C1) having a certain specific surface area.

First, the components (A) to (C) used to prepare the cathode mixture are described.

### <(A) Ion-conductive material>

The ion-conductive material (A) functions as a solid electrolyte in the cathode mixture, and contains phosphorus at a weight ratio of 0.2 to 0.55. In the cathode mixture of the present invention, it is very important to use as the ion-conductive material (A) an ion-conductive material in which phosphorus is contained and the weight ratio of phosphorus is 0.2 to 0.55. As described above, the use of such an ion-conductive material reduces resistance (reaction resistance) when sulfur, electrons, and sodium ions react with each other at the reaction interface in the cathode mixture layer, so that the charge/discharge capacity of the all-solid-state sodium-sulfur battery can be ensured even at normal temperature. In contrast, if the weight ratio of phosphorus in the ion-conductive material (A) is less than 0.2 or more than 0.55, a sufficient charge/discharge capacity cannot be ensured in the all-solid-state sodium-sulfur battery using such an ion-conductive material (A). In this regard, it is considered that if the weight ratio of phosphorus is more than 0.55, the interaction will occur so that phosphorus excessively acts on sulfur and thus the effect of deactivating sulfur is increased, resulting in reduced charge/discharge capacity. The weight ratio of phosphorus in the ion-conductive material (A) is preferably 0.2 to 0.45.

Specific examples of the ion-conductive material (A) include compounds represented by PₓS_{y} where x and y independently represent an integer that gives a stoichiometric ratio, and composites of Na, S, and P. These ion-conductive materials (A) may be used alone or in combinations of two or more.

The term "composite" as used herein does not refer to a mere mixture of predetermined components, but refers to a mixture of predetermined components to which a mechanical, thermal, or chemical energy has been applied to cause part or all of the predetermined components to undergo a chemical reaction. Moreover, the phrase "formed into a composite" as used herein does not refer to merely mixing predetermined components, but refers to mixing predetermined components followed by applying a mechanical, thermal, or chemical energy to cause part or all of the predetermined components to undergo a chemical reaction.

The composite of Na, S, and P is preferably a composite obtained by mechanically milling Na₂S, S, and P, or a composite obtained by mechanically milling Na₂S and PₓS_{y} where x and y independently represent an integer that gives a stoichiometric ratio. This is because by mechanical milling, bonds can be easily rearranged and an amorphous ion-conductive material can be obtained.

The composite of Na, S, and P may be obtained by mechanically milling the combination of Na₂S, S, and P or the combination of Na₂S and PₓS_{y} where x and y independently represent an integer that gives a stoichiometric ratio, and further at least one selected from the group consisting of M_{z}S_{w} where M represents Si, Ge, B, or Al, and z and w independently represent an integer that gives a stoichiometric ratio, diphosphorus pentoxide, sodium oxide, and sodium iodide. This is because the ion conductivity of the component (A) can be improved in some cases.

In the case where the ion-conductive material (A) is the composite of Na₂S and PₓS_{y}, the molar ratio of Na₂S in the composite, wherein the total amount of Na₂S and PₓS_{y} is 100 is not particularly limited as long as the ion-conductive material (A) contains phosphorus at a weight ratio of 0.2 to 0.55.

The composite of Na₂S and PₓS_{y} is preferably obtained by mechanical milling, as described above. Specifically, the mechanical milling may be carried out, for example, by using a planetary ball mill at a rotation speed of 150 to 500 rpm, a revolution speed of 200 to 1000 rpm (in the counter direction to the rotation) for 0.5 to 20 hours.

Whether Na₂S and PₓS_{y} have been formed into a composite or merely mixed can be determined by Raman spectroscopy. For example, in the case of a composite of Na₂S and P₂S₅, a peak at 300 cm⁻¹ from P₂S₅ used as a starting material of the composite disappears or becomes small relative to the main peak around 400 cm⁻¹. This indicates that Na₂S and P₂S₅ have been formed into a composite.

### <(B) Sulfur and/or its discharge product>

The sulfur and/or its discharge product (B) functions as a cathode active material in the cathode mixture. The sulfur may be elemental sulfur, for example. The discharge product of sulfur is not particularly limited, and examples include sodium polysulfides such as Na₂S₈, Na₂S₄, and Na₂S₂, and sodium sulfide (Na₂S) . These compounds may be used alone or in combinations of two or more. These compounds may also be used with elemental sulfur.

In the cathode mixture of the present invention, the amount of the sulfur and/or its discharge product (B) is not particularly limited, and is preferably 40% by weight or more, more preferably 50% by weight or more of the total amount of the ion-conductive material (A), the sulfur and/or its discharge product (B), and the conductive material (C). If the amount of the component (B) is less than 40% by weight of the total amount of the components (A) to (C), charge/discharge capacity (e.g., 200 mAh/g or more per cathode mixture) may not be ensured.

The amount of the component (B) is preferably 70% by weight or less of the total amount of the components (A) to (C). If the amount of the component (B) is more than 70% by weight of the total amount of the components (A) to (C), the amounts of the ion-conductive material (A) and the conductive material (C) are reduced, which may result in reduced charge/discharge efficiency.

### <(C) Conductive material>

The conductive material (C) at least includes the conductive material (C1) having a specific surface area of 1000 m²/g or more. The material of the conductive material (C1) is not particularly limited as long as the specific surface area is 1000 m²/g or more, and examples include activated charcoal, furnace black (e.g. furnace black having a hollow shell structure), and graphene. These may be used alone or in combinations of two or more. Among these, preferred is activated charcoal because it has a high specific surface area.

The furnace black having a hollow shell structure refers to one type of conductive furnace black that has a hollow shell structure with a porosity of about 60 to 80%. The term "hollow shell structure" refers to a structure in which an outer shell in particle form is formed by thinly assembled graphite crystals, and the inside of the outer shell is hollow. Examples of the furnace black having a hollow shell structure include Ketjen black (Lion Corporation).

The conductive material (C1) has a specific surface area of 1000 m²/g or more. If the specific surface area is less than 1000 m²/g, the number of reaction points between the sulfur and/or its discharge product (B) and the conductive material (C) cannot be sufficiently increased, so that the effect of ensuring charge/discharge capacity even at normal temperature cannot be achieved. The specific surface area of the conductive material (C1) is preferably 2000 m²/g or more, more preferably 3000 m²/g or more, because the effect of ensuring charge/discharge capacity even at normal temperature can be more surely achieved. Conversely, the upper limit of the specific surface area of the conductive material (C1) is preferably 6000 m²/g.

The term "specific surface area" as used herein refers to a BET specific surface area determined by the Brenauer-Emmet-Telle (BET) method. Specifically, it is determined using a nitrogen adsorption isotherm measured by adsorbing nitrogen gas onto a sample of the conductive material (C1) or a conductive material (C2), which will be described later, at liquid nitrogen temperature. As an apparatus to determine the BET specific surface area, for example, an automatic specific surface area/pore distribution measuring apparatus (BELSORP-mini II, BEL Japan, Inc.) may be used.

The component (C) may further include at least one conductive material (C2) selected from the group consisting of graphite, acetylene black, carbon nanotube, and carbon fiber, in addition to the conductive material (C1). This is because if the electric conductivity of the conductive material (C1) is low, the further use of the conductive material (C2) having a high electric conductivity improves electron conductivity in the cathode mixture, which may result in further improved charge/discharge capacity.

In the case where the conductive material (C) includes the conductive material (C1) and further the conductive material (C2), the ratio thereof ((C1) : (C2)), by weight, is not particularly limited, and is preferably 9.5:0.5 to 5:5. This is because the reaction shown in the formula (1) can be more promoted by increasing the proportion of the conductive material (C1) which has a large specific surface area and can provide many reaction points with the component (B).

In the cathode mixture of the present invention, the ratio of the components, i.e., the ion-conductive material (A), the sulfur and/or its discharge product (B), and the conductive material (C) (component (A):component (B):component (C)), by weight, is not particularly limited, and is preferably 10-50:40-70:5-25. If the proportion of the ion-conductive material (A) is smaller than the above range, the amount of sodium ions that can move to the cathode is reduced, possibly resulting in an insufficient charge/discharge capacity. Conversely, if the proportion is larger than the above range, the amount of the conductive material (C) is reduced, possibly resulting in a lowered charge/discharge capacity per cathode mixture. Moreover, if the proportion of the conductive material (C) is smaller than the above range, the amount of electrons that can move to the cathode is reduced, possibly resulting in an insufficient charge/discharge capacity. Conversely, if the proportion is larger than the above range, the amount of the ion-conductive material (A) is reduced, possibly resulting in a lowered charge/discharge capacity per cathode mixture.

As described above, in the cathode mixture of the present invention, the use of the ion-conductive material (A) containing phosphorus in a specific amount (weight ratio) and the use of the conductive material (C1) having a certain specific surface area as the conductive material (C) are very important to achieve the effect of the present invention.

The cathode mixture of the present invention may further contain optional components such as a binder or solvent, if necessary, in addition to the components (A) to (C).

### <Binder>

The binder is not particularly limited, and may be a thermoplastic resin, a thermosetting resin, or the like. Examples include polyethylene, polypropylene, polytetrafluoroethylene (PTFE), polyvinylidene fluoride (PVDF), styrene butadiene rubber, tetrafluoroethylene-hexafluoroethylene copolymers, tetrafluoroethylene-hexafluoropropylene copolymers (FEP), tetrafluoroethylene-perfluoroalkyl vinyl ether copolymers (PFA), vinylidene fluoride-hexafluoropropylene copolymers, vinylidene fluoride-chlorotrifluoroethylene copolymers, ethylene-tetrafluoroethylene copolymers (ETFE resins), polychlorotrifluoroethylene (PCTFE), vinylidene fluoride-pentafluoropropylene copolymers, propylene-tetrafluoroethylene copolymers, ethylene-chlorotrifluoroethylene copolymers (ECTFE), vinylidene fluoride-hexafluoropropylene-tetrafluoroethylene copolymers, vinylidene fluoride-perfluoromethyl vinyl ether-tetrafluoroethylene copolymers, ethylene-acrylic acid copolymers, polyacrylic acid, sodium polyacrylate, lithium polyacrylate, polymethacrylic acid, sodium polymethacrylate, and lithium polymethacrylate. These binders may be used alone or in combinations of two or more.

In the case where the cathode mixture of the present invention contains the binder, the amount thereof is not particularly limited, and is preferably 0.01 to 10% by weight of the cathode mixture.

### <Solvent>

A cathode mixture layer can be easily prepared from the cathode mixture obtained by mixing the solvent. The solvent is removed by drying in the preparation of a cathode mixture layer. The solvent is not particularly limited, and examples include amine solvents such as N,N-dimethylaminopropylamine and diethylenetriamine, ether solvents such as tetrahydrofuran, ketone solvents such as methyl ethyl ketone, ester solvents such as methyl acetate, amide solvents such as dimethylacetamide and 1-methyl-2-pyrrolidone, and hydrocarbon solvents such as toluene, xylene, n-hexane, and cyclohexane. These solvents may be used alone or in combinations of two or more.

In the case where the cathode mixture of the present invention contains the solvent, the amount thereof is not particularly limited, and is preferably 10 to 99% by weight of the cathode mixture.

### <Method for preparing cathode mixture>

The cathode mixture of the present invention can be obtained by mixing the ion-conductive material (A), the sulfur and/or its discharge product (B), and the conductive material (C1), and optional components such as the conductive material (C2), binder, or solvent, if necessary.

The components may be mixed by any conventionally known method, such as, for example, by using Planetary Ball Mill (Fritsch), Hybridization System (Nara Machinery Co., Ltd.), Cosmos (Kawasaki Heavy Industries, Ltd.), Mechano Fusion System (Hosokawa Micron Corporation), Nobilta NOB (Hosokawa Micron Corporation), Mechanomill (Okada Seiko Co., Ltd.), Thetacomposer (Tokuju Corporation), Nanosonic Mill (Inoue MFG., Inc.), Kneader (Inoue MFG., Inc.), Supermasscolloider (Masuko Sangyo Co., Ltd.), nano-mech REACTOR (Techno-eye), Konel Despa (Asada Iron Works Co., Ltd.), Planetary Mixer (Asada Iron Works Co., Ltd.), Miracle KCK (Asada Iron Works Co., Ltd.), Vibration Mill (Matsubo Corporation), or the like.

In the preparation of the cathode mixture, after the components are mixed, the mixture may be heated. This is because heat treatment can increase the strength of the contact interfaces of the ion-conductive material (A), the sulfur and/or its discharge product (B), and the conductive material (C) in the cathode mixture and thus can reduce the interfacial resistance. The heat treatment may be carried out in any manner, such as, for example, at 80°C to 250°C, preferably 100°C to 200°C, for one second to 10 hours in an atmosphere of argon, nitrogen, air, or the like. The heat treatment may be carried out using conventionally known heating apparatuses. Specific examples include constant temperature dryers, fan dryers, vacuum dryers, and infrared dryers.

### «All-solid-state sodium-sulfur battery»

Next, the all-solid-state sodium-sulfur battery of the present invention will be described with reference to drawings.

The all-solid-state sodium-sulfur battery of the present invention includes a cathode mixture layer containing the cathode mixture of the present invention, a solid electrolyte layer, an anode, and a current collector.

The term "all-solid-state" as used herein refers to one that includes a polymeric solid electrolyte and/or an inorganic solid electrolyte as the electrolyte, in which the anode, the solid electrolyte layer, and the cathode mixture layer are substantially free of liquids, including solvents and molten active materials, during operation. The phrase "substantially free of liquids" as used herein means that a trace amount of liquid may be contained.

Fig. 1 is a cross-sectional view schematically showing an example of an embodiment of the all-solid-state sodium-sulfur battery of the present invention. As shown in Fig. 1, an all-solid-state sodium-sulfur battery 10 is configured to include an anode 2, a solid electrolyte layer 3, and a cathode mixture layer 4 that are laminated in this order, and also include current collectors (an anode current collector 1 and a cathode current collector 5) on its sides.

The current collectors (anode current collector and cathode current collector), the anode, the solid electrolyte layer, and the cathode mixture layer are described in this order below.

### <Current collector>

The current collector is not particularly limited. For example, Al, Cu, Ni, stainless steel and the like can be used. As the anode current collector, Cu is preferably used because it is less likely to form an alloy with sodium and it can be easily processed into a thin membrane. As the cathode current collector, Al is preferably used because it can be easily processed into a thin membrane and it is low cost.

### <Anode>

The anode is not particularly limited as long as it contains a material that absorbs and releases sodium ions as an anode active material. Examples of the material that absorbs and releases sodium ions include metallic sodium, sodium alloys, metal oxides, metal sulfides, and carbonaceous materials that absorb and release sodium ions. Examples of sodium alloys include alloys of sodium with aluminum, silicon, tin, magnesium, indium, calcium, or the like. Examples of metal oxides include tin oxides, silicon oxides, sodium titanium oxides, niobium oxides, and tungsten oxides. Examples of metal sulfides include tin sulfides and titanium sulfides. Examples of carbonaceous materials that absorb and release sodium ions include hard carbon, graphite, coke, mesophase pitch carbon fibers, spherical carbon, and resin baked carbon.

The anode may be prepared by any method. Examples include a method in which the material that absorbs and releases sodium ions is pressed and a method in which an anode precursor dispersion containing the material that absorbs and releases sodium ions and a solvent is applied to an anode current collector, dried and pressed. The solvent contained in the anode precursor dispersion may be as described above for the cathode mixture. The solvent is used to facilitate application of the anode precursor dispersion, and is removed by drying after the application.

### <Solid electrolyte layer>

The solid electrolyte layer may be formed of a polymeric solid electrolyte and/or an inorganic solid electrolyte. The inorganic solid electrolyte is not particularly limited, and may be a solid electrolyte having an electric conductivity of 0.1 mS/cm or higher, for example. Although the solid electrolyte is not particularly limited as long as it has an electric conductivity of 0.1 mS/cm or higher, specific examples include sodium salts, sodium sulfides, sodium oxides, and sodium nitrides.

The solid electrolyte is preferably a sodium salt, a sodium sulfide, or a combination thereof, because of their high electric conductivity and low grain boundary resistance.

Examples of the sodium salt include, but not limited to, NaBH₄ and NaI. Examples of the sodium sulfide include, but not limited to, composites with the PₓS_{y} described above, specifically, the composites of Na₂S and PₓS_{y}. Other examples include composites of Na₂S and PₓS_{y} and further P₂O₅, GeS₂, SiS₂, Na₃PO₄, Na₄SiO₄, or the like. Examples of the sodium oxide include, but not limited to, Na₂O and Na₂O₂. Examples of the sodium nitride include, but not limited to, Na₃N. These solid electrolytes may be used alone or in combinations of two or more.

The solid electrolyte layer formed of the inorganic solid electrolyte may be prepared by, for example, a method in which the solid electrolyte is press-formed or a method in which the solid electrolyte is dispersed in a solvent and the dispersion is applied and dried. The method in which the solid electrolyte is press-formed is not particularly limited, and may be carried out for example by sandwiching and pressing the solid electrolyte between an anode current collector and a cathode current collector, or by pressing the solid electrolyte using a jig of a press. In the case where the solid electrolyte layer is prepared by the method in which the solid electrolyte is dispersed in a solvent and the dispersion is applied and dried, the dried solid electrolyte layer may be pressed in the same manner as described above. The solvent used for dispersing the solid electrolyte may be as described above for the cathode mixture. When the solid electrolyte layer is prepared by these methods, heat treatment may be performed at any timing in order to reduce the interfacial resistance of the solid electrolyte layer and to improve the compactness thereof.

Examples of the solid electrolyte layer formed of the polymeric solid electrolyte include polyethylene oxide polymers containing sodium salts such as sodium perchlorate or sodium bis(trifluoromethanesulfonyl)amide.

### <Cathode mixture layer>

The cathode mixture layer may be prepared by, for example, a method in which the cathode mixture is supported on a cathode current collector or a method in which the cathode mixture is press-formed. The method in which the cathode mixture is supported on a cathode current collector is not particularly limited, and may be carried out for example by press-forming the cathode mixture, or by making the cathode mixture into a paste using an organic solvent or the like, applying the resulting cathode mixture to a cathode current collector, and drying and then fixing them to each other by, for example, pressing. The method in which the cathode mixture is press-formed is not particularly limited, and may be carried out for example by sandwiching and pressing the cathode mixture between a solid electrolyte layer and a cathode current collector, or by pressing the cathode mixture using a jig of a press. The cathode mixture may be applied to a cathode current collector by any method, such as by slit die coating, screen coating, curtain coating, knife coating, gravure coating, or electrostatic spray coating. When the cathode mixture layer is prepared by these methods, heat treatment may be performed at any timing in order to reduce the interfacial resistance of the cathode mixture layer and to improve the compactness thereof.

The all-solid-state sodium-sulfur battery may include a separator and the like in addition to the above-described anode current collector, anode, solid electrolyte layer, cathode mixture layer, and cathode current collector. The all-solid-state sodium-sulfur battery may have any shape, such as a coin, button, sheet, laminate, cylindrical, flat, or rectangular shape.

### <Method for preparing all-solid-state sodium-sulfur battery>

The all-solid-state sodium-sulfur battery may be prepared by any method such as those described below.

First, a solid electrolyte is sandwiched and pressed between an anode current collector and a cathode current collector to prepare a solid electrolyte layer. Next, a cathode mixture is deposited on one side of the solid electrolyte layer and the stack is sandwiched and pressed between the current collectors (the anode current collector on the solid electrolyte layer side, and the cathode current collector on the cathode mixture side) . Thus, the cathode mixture layer and the cathode current collector are laminated on one face of the solid electrolyte layer, while the anode current collector is laminated on the other face of the solid electrolyte layer. Finally, after the anode current collector is removed temporarily, an anode is put on the solid electrolyte layer on the side opposite to the cathode mixture layer and then the anode current collector is put on the anode side, followed by pressing. Thus, the anode and the anode current collector are laminated on the other face of the solid electrolyte layer. Moreover, the layers may be pressed one by one as described above, or two or more layers may be deposited and pressed together to form a laminate. The all-solid-state sodium-sulfur battery can be prepared by such methods.

### <Application of all-solid-state sodium-sulfur battery>

The all-solid-state sodium-sulfur battery may be used in any application. For example, the all-solid-state sodium-sulfur battery is suitable for electrical products that require high energy density, such as hybrid cars and electric cars.

### EXAMPLES

The present invention is described with reference to examples, but the present invention is not limited to these examples.

### 1. Preparation of ion-conductive material (A)

### (Comparative Synthesis Example 1)

Na₂S (Aldrich) and P₂S₅ (Aldrich) were weighed in a molar ratio of 75:25 and mixed in a mortar. The mixture was treated in a planetary ball mill at a rotation speed of 250 rpm and a revolution speed of 500 rpm (in the counter direction to the rotation) for 10 hours to prepare an ion-conductive material in which the weight ratio of phosphorus was 0.135.

### (Synthesis Example 1)

Na₂S and P₂S₅ were weighed in a molar ratio of 50:50 and mixed in a mortar. The mixture was treated in a planetary ball mill at a rotation speed of 250 rpm and a revolution speed of 500 rpm (in the counter direction to the rotation) for 10 hours to prepare an ion-conductive material (A) in which the weight ratio of phosphorus was 0.206.

### (Synthesis Example 2)

Na₂S and P₂S₅ were weighed in a molar ratio of 30:70 and mixed in a mortar. The mixture was treated in a planetary ball mill at a rotation speed of 250 rpm and a revolution speed of 500 rpm (in the counter direction to the rotation) for 10 hours to prepare an ion-conductive material (A) in which the weight ratio of phosphorus was 0.242.

### (Synthesis Example 3)

P₂S₅ was mixed in a mortar to give an ion-conductive material (A) in which the weight ratio of phosphorus was 0.279.

### (Synthesis Example 4)

Na₂S, sulfur (Aldrich), and red phosphorus (Aldrich) were weighed in a molar ratio of 1.9:2.0:2.5 and mixed in a mortar. The mixture was treated in a planetary ball mill at a rotation speed of 250 rpm and a revolution speed of 500 rpm (in the counter direction to the rotation) for 10 hours to prepare an ion-conductive material (A) in which the weight ratio of phosphorus was 0.212.

### (Synthesis Example 5)

Na₂S, sulfur (Aldrich), and red phosphorus (Aldrich) were weighed in a molar ratio of 1.5:2.0:2.1 and mixed in a mortar. The mixture was treated in a planetary ball mill at a rotation speed of 250 rpm and a revolution speed of 500 rpm (in the counter direction to the rotation) for 10 hours to prepare an ion-conductive material (A) in which the weight ratio of phosphorus was 0.250.

### 2. Materials used

The following materials were used in examples and comparative examples described below.

### 2-1. Sulfur and/or its discharge product (B)

Sulfur (Aldrich)

### 2-2. Conductive material (C)

Activated charcoal A (Kansai Coke and Chemicals Company, Limited., specific surface area: 3000 m²/g)
Activated charcoal B (YP80F, Kuraray Co., Ltd., specific surface area: 2000 m²/g)
Furnace black (Ketjen black EC600JD, Lion Corporation, specific surface area: 1200 m²/g)
Acetylene black (Aldrich, specific surface area: 70 m²/g)
Graphite (Wako Pure Chemical Industries, Ltd., specific surface area: 5 m²/g)

### 3. Preparation of cathode mixture

### (Comparative Example 1)

The ion-conductive material obtained in Comparative Synthesis Example 1 was used as the ion-conductive material (A), sulfur was used as the sulfur and/or its discharge product (B), and furnace black, which corresponds to a conductive material (C1), was used as the conductive material (C). An amount of 100 mg of the ion-conductive material (A), 80 mg of the sulfur and/or its discharge product (B), and 20 mg of the conductive material (C) were weighed so that these components were present at a ratio (weight ratio) of 50:40:10. Using a planetary ball mill (premium line P-7, Frilsch, revolution radius: 0.07 m, rotation radius: 0.0235 m, ratio of rotation to revolution: -2), these components were then mixed in a 45 ml pot with 5 mm zirconia balls (about 40 g) at a revolution speed of 370 rpm for four hours to prepare a cathode mixture for all-solid-state sodium-sulfur batteries.

### (Comparative Example 2)

The ion-conductive material obtained in Comparative Synthesis Example 1 was used as the ion-conductive material (A), sulfur was used as the sulfur and/or its discharge product (B), and activated charcoal A, which corresponds to a conductive material (C1), was used as the conductive material (C). An amount of 78 mg of the ion-conductive material (A), 100 mg of the sulfur and/or its discharge product (B), and 22 mg of the conductive material (C) were weighed so that these components were present at a ratio (weight ratio) of 39:50:11. Using a planetary ball mill (premium line P-7, Frilsch, revolution radius: 0.07 m, rotation radius: 0.0235 m, ratio of rotation to revolution: -2), these components were then mixed in a 45 ml pot with 5 mm zirconia balls (about 40 g) at a revolution speed of 370 rpm for four hours to prepare a cathode mixture for all-solid-state sodium-sulfur batteries.

### (Comparative Example 3)

The ion-conductive material (A) obtained in Synthesis Example 1 was used as the ion-conductive material (A), sulfur was used as the sulfur and/or its discharge product (B), and acetylene black was used as the conductive material (C). An amount of 100 mg of the ion-conductive material (A), 80 mg of the sulfur and/or its discharge product (B), and 20 mg of the conductive material (C) were weighed so that these components were present at a ratio (weight ratio) of 50:40:10. Using a planetary ball mill (premium line P-7, Frilsch, revolution radius: 0.07 m, rotation radius: 0.0235 m, ratio of rotation to revolution: -2), these components were then mixed in a 45 ml pot with 5 mm zirconia balls (about 40 g) at a revolution speed of 370 rpm for four hours to prepare a cathode mixture for all-solid-state sodium-sulfur batteries.

### (Comparative Example 4)

A cathode mixture was prepared in the same manner as in Comparative Example 3, except that 78 mg of the ion-conductive material (A), 100 mg of the sulfur and/or its discharge product (B), and 22 mg of the conductive material (C) were weighed so that these components were present at a ratio (weight ratio) of 39:50:11.

### (Example 1)

A cathode mixture was prepared in the same manner as in Comparative Example 1, except that the ion-conductive material (A) obtained in Synthesis Example 1 was used as the ion-conductive material (A), instead of the ion-conductive material obtained in Comparative Synthesis Example 1.

### (Example 2)

A cathode mixture for all-solid-state sodium-sulfur batteries was prepared in the same manner as in Example 1, except that activated charcoal A, which corresponds to a conductive material (C1), was used instead of the furnace black corresponding to the conductive material (C1).

### (Examples 3 to 6)

Cathode mixtures were prepared in the same manner as in Comparative Example 2, except that the ion-conductive materials (A) obtained in Synthesis Examples 1 and 3 to 5 were used as the ion-conductive material (A), instead of the ion-conductive material obtained in Comparative Synthesis Example 1.

### (Example 7)

The ion-conductive material (A) obtained in Synthesis Example 2 was used as the ion-conductive material (A), sulfur was used as the sulfur and/or its discharge product (B), and activated charcoal B was used as the conductive material (C) . An amount of 78 mg of the ion-conductive material (A), 100 mg of the sulfur and/or its discharge product (B), and 22 mg of the conductive material (C) were weighed so that these components were present at a ratio (weight ratio) of 39:50:11. Using a planetary ball mill (premium line P-7, Frilsch, revolution radius: 0.07 m, rotation radius: 0.0235 m, ratio of rotation to revolution: -2), these components were then mixed in a 45 ml pot with 5 mm zirconia balls (about 40 g) at a revolution speed of 370 rpm for four hours to prepare a cathode mixture for all-solid-state sodium-sulfur batteries.

### (Example 8)

A cathode mixture was prepared in the same manner as in Example 4, except that 60 mg of the ion-conductive material (A), 120 mg of the sulfur and/or its discharge product (B), and 20 mg of the conductive material (C) were weighed so that these components were present at a ratio (weight ratio) of 30:60:10.

### (Example 9)

A cathode mixture was prepared in the same manner as in Example 8, except that a combination of activated charcoal A, which corresponds to a conductive material (C1), and graphite, which corresponds to a conductive material (C2), at a weight ratio of 9:1 was used as the conductive material (C), instead of the activated charcoal A corresponding to a conductive material (C1).

### (Example 10)

A cathode mixture was prepared in the same manner as in Example 6, except that 60 mg of the ion-conductive material (A), 120 mg of the sulfur and/or its discharge product (B), and 20 mg of the conductive material (C) were weighed so that these components were present at a ratio (weight ratio) of 30:60:10.

### 4. Preparation of all-solid-state sodium-sulfur battery

A SUS 304 cylindrical jig (10 mm Φ, height 10 mm) as an anode current collector was inserted into a polycarbonate cylindrical tube jig (inner diameter 10 mm Φ, outer diameter 23 mm Φ, height 20 mm) from the bottom, 50 mg of a solid electrolyte (a composite obtained by firing 95(75Na₂S-25P₂S₅)-5SiS₂ at 270°C for two hours) was put into the polycarbonate cylindrical tube jig from the top, and then a SUS304 cylindrical tube jig (10 mm Φ, height 15 mm) as a cathode current collector was inserted into the polycarbonate cylindrical tube jig from the top to sandwich the solid electrolyte therebetween. The sandwiched solid electrolyte was pressed at a pressure of 200 MPa for three minutes to form a solid electrolyte layer having a diameter of 10 mm Φ and a thickness of about 0.6 mm.

Next, after the SUS304 cylindrical jig (cathode current collector) inserted from the top was pulled out temporarily, one of the cathode mixtures prepared in Examples 1 to 10 and Comparative Examples 1 to 4 in an amount of 3.75 mg when calculated as sulfur was put on the solid electrolyte layer in the polycarbonate cylindrical tube, and the SUS304 cylindrical jig (cathode current collector) was again inserted from the top. Then, the cathode mixture was pressed at a pressure of 200 MPa for three minutes to form a cathode mixture layer having a diameter of 10 mm Φ and a thickness of about 0.1 mm.

Next, after the SUS304 cylindrical jig (anode current collector) inserted from the bottom was pulled out, 100 mg of a sodium-tin alloy powder as an anode was put into the polycarbonate cylindrical tube jig from the bottom. Here, the sodium-tin alloy powder was prepared by mixing a mixture of Na and Sn at a molar ratio of 15:4 in a 45 ml pot with ten 10 mm zirconia balls in a planetary ball mill (premium line P-7, Frilsch, revolution radius: 0.07 m, rotation radius: 0.0235 m, ratio of rotation to revolution: -2) at a revolution speed of 500 rpm for four hours. After the SUS304 cylindrical jig (anode current collector) was again inserted from the bottom, the sodium-tin alloy powder was pressed at a pressure of 80 MPa for three minutes to form an anode. In this way, all-solid-state sodium-sulfur batteries in which an anode current collector, a sodium-tin alloy anode, a solid electrolyte layer, a cathode mixture layer, and a cathode current collector were laminated in this order from the bottom were prepared.

### 5. Evaluation method

### (Charge/discharge test)

The all-solid-state sodium-sulfur batteries prepared as above were charged and discharged between 0.5 to 3 V at a current density of 0.13 mA/cm² using a charge/discharge device (ACD-M01A, Aska Electronic Co., Ltd.), and the capacity per cathode mixture of each battery during the second cycle discharge was measured. Table 1 shows the results.

**[Table 1]**

| Ion-conductive material (A) | | | Conductive material (C) | Compositional ratio (weight ratio) of components (A), (B), and (C) | | | | | |
|---|---|---|---|---|---|---|---|---|---|
| | | | | (A):(B):(C) = 50:40:10 | | (A):(B):(C) = 39:50:11 | | (A):(B):(C) = 30:60:10 | |
| | Weight ratio of phosphorus | Electric conductivity (mS/cm) | | Capacity (mAh/g) per cathode mixture during discharge at 0.13mA/cm² | | | | | |
| Comparative Synthesis Example 1 | 0.135 | 0.0789 | Activated charcoal A | | | Comparative Example 2 | 83 | | |
| | | | Furnace black | Comparative Example 1 | 113 | | | | |
| Synthesis Example 1 | 0206 | 0.0003 | Activated charcoal A | Example 2 | 300 | Example 3 | 311 | | |
| | | | Furnace black | Example 1 | 335 | | | | |
| | | | Acetylene black | Comparative Example 3 | 0 | Comparative Example 4 | 0 | | |
| Synthesis Example 2 | 0242 | < 0.0001 | Activated charcoal B | | | Example 7 | 331 | | |
| Synthesis Example 3 | 0.279 | < 0.0001 | Activated charcoal A | | | Example 4 | 334 | Example 8 | 200 |
| | | | Activated charcoal A + Graphite | | | | | Example 9 | 176 |
| Synthesis Example 4 | 0.212 | 0.0087 | Activated charcoal A | | | Example 5 | 256 | | |
| Synthesis Example 5 | 0.250 | 0.0070 | Activated charcoal A | | | Example 6 | 315 | Example 10 | 347 |

Table 1 also includes electric conductivities (mS/cm) of the ion-conductive materials used in the synthesis examples and comparative synthesis example. A SUS304 cylindrical jig (10 mm Φ, height 10 mm) was inserted into a polycarbonate cylindrical tube jig (inner diameter 10 mm Φ, outer diameter 23 mm Φ, height 20 mm) from the bottom, 70 mg of the ion-conductive material was put into the polycarbonate cylindrical tube jig from the top, and then a SUS304 cylindrical jig (10 mm Φ, height 15 mm) was inserted into the polycarbonate cylindrical tube jig from the top to sandwich the ion-conductive material therebetween. The sandwiched ion-conductive material was pressed at a pressure of 200 MPa for three minutes to form an ion-conductive material layer having a diameter of 10 mm Φ and a thickness of about 0.5 mm. In this way, test samples for measuring electric conductivity were prepared. The resistance of the test samples was determined by alternating current impedance analysis with Cell Test System 1400 (Solartron), and the electric conductivity was calculated using the thickness and diameter of the ion-conductive material layer (applied voltage 50 mV, measurement frequency 1 to 1,000,000 Hz) .

### REFERENCE SIGNS LIST

1. Anode current collector
2. Anode
3. Solid electrolyte layer
4. Cathode mixture layer
5. Cathode current collector
10. All-solid-state sodium-sulfur battery

## Claims

1. A cathode mixture for use in a cathode mixture layer of an all-solid-state sodium-sulfur battery, the cathode mixture comprising the following components (A) to (C):
(A) an ion-conductive material containing phosphorus at a weight ratio of 0.2 to 0.55;
(B) sulfur and/or its discharge product; and
(C) a conductive material,
the component (C) comprising a conductive material (C1) having a specific surface area of 1000 m²/g or more.

2. The cathode mixture according to claim 1,
wherein the component (A) is PₓS_{y} where x and y independently represent an integer that gives a stoichiometric ratio, and/or a composite of Na, S, and P.

3. The cathode mixture according to claim 2,
wherein the composite of Na, S, and P is obtained by mechanically milling a combination of Na₂S, S, and P or a combination of Na₂S and PₓS_{y} where x and y independently represent an integer that gives a stoichiometric ratio.

4. The cathode mixture according to any one of claims 1 to 3,
wherein the component (B) is present in an amount of 40% by weight or more of the total amount of the components (A), (B), and (C).

5. The cathode mixture according to claim 3 or 4,
wherein the composite of Na, S, and P is obtained by mechanically milling the combination of Na₂S, S, and P or the combination of Na₂S and PₓS_{y}, and further at least one selected from the group consisting of M_{z}S_{w} where M represents Si, Ge, B, or Al, and z and w independently represent an integer that gives a stoichiometric ratio, diphosphorus pentoxide, sodium oxide, and sodium iodide.

6. The cathode mixture according to any one of claims 1 to 5,
wherein the component (C) further comprises at least one conductive material (C2) selected from the group consisting of graphite, acetylene black, carbon nanotube, and carbon fiber.

7. An all-solid-state sodium-sulfur battery, comprising:
a cathode mixture layer comprising the cathode mixture according to any one of claims 1 to 6;
a solid electrolyte layer;
an anode; and
a current collector.

## Patentansprüche

1. Kathodenmischung zur Verwendung in einer Kathodenmischungsschicht einer Natrium-Schwefel-Festkörperbatterie, wobei die Kathodenmischung die folgenden Komponenten (A) bis (C) umfasst:
(A) ein Ionen-leitendes Material, welches Phosphor in einem Gewichtsverhältnis von 0,2 bis 0,55 enthält;
(B) Schwefel und/oder sein Entladungsprodukt; und
(C) ein leitendes Material,
wobei die Komponente (C) ein leitendes Material (C1) mit einer spezifischen Oberfläche von 1000 m²/g oder mehr umfasst.

2. Kathodenmischung gemäß Anspruch 1, wobei die Komponente (A) PₓS_{y}, worin x und y unabhängig voneinander eine ganze Zahl, die ein stöchiometrisches Verhältnis angibt, bedeuten, und/oder ein Verbundwerkstoff aus Na, S und P ist.

3. Kathodenmischung gemäß Anspruch 2, wobei der Verbundwerkstoff aus Na, S und P durch mechanisches Mahlen einer Kombination aus Na₂S, S und P oder einer Kombination aus Na₂S und PₓS_{y}, wobei x und y unabhängig voneinander eine ganze Zahl, die ein stöchiometrisches Verhältnis angibt, bedeuten, erhalten wird.

4. Kathodenmischung gemäß mindestens einem der Ansprüche 1 bis 3,
wobei die Komponente (B) in einer Menge von 40 Gewichts-% oder mehr der Gesamtmenge der Komponenten (A), (B) und (C) vorhanden ist.

5. Kathodenmischung gemäß Anspruch 3 oder 4, wobei der Verbundwerkstoff aus Na, S und P erhalten wird durch mechanisches Mahlen der Kombination aus Na₂S, S und P oder der Kombination aus Na₂S und PₓS_{y}, und ferner wenigstens einem Vertreter ausgewählt aus der Gruppe bestehend aus M_{z}S_{w}, worin M Si, Ge, B oder Al bedeutet und z und w unabhängig voneinander eine ganze Zahl, die ein stöchiometrisches Verhältnis angibt, bedeuten, Diphosphorpentoxid, Natriumoxid, und Natriumiodid.

6. Kathodenmischung gemäß mindestens einem der Ansprüche 1 bis 5,
wobei die Komponente (C) ferner wenigstens ein leitendes Material (C1), ausgewählt aus der Gruppe bestehend aus Graphit, Acetylenruß, Kohlenstoffnanoröhre und Kohlenstofffaser, umfasst.

7. Natrium-Schwefel-Festkörperbatterie, umfassend:
eine Kathodenmischungsschicht, die die Kathodenmischung gemäß mindestens einem der Ansprüche 1 bis 6 umfasst;
eine feste Feststoffelektrolytschicht;
eine Anode; und
einen Stromabnehmer.

## Revendications

1. Mélange de cathode à utiliser dans une couche de mélange de cathode d'une batterie au sodium-soufre entièrement à l'état solide, le mélange de cathode comprenant les composants (A) à (C) suivants :
(A) un matériau conducteur d'ions contenant du phosphore à un rapport en poids de 0,2 à 0,55 ;
(B) du soufre et/ou son produit de décharge ; et
(C) un matériau conducteur,
le composant (C) comprenant un matériau conducteur (C1) présentant une surface spécifique de 1000 m²/g ou plus.

2. Mélange de cathode selon la revendication 1,
dans lequel le composant (A) est PₓS_{y} où x et y représentent indépendamment un nombre entier qui donne un rapport stoechiométrique, et/ou un composite de Na, S, et P.

3. Mélange pour de selon la revendication 2,
dans lequel le composite de Na, S, et P est obtenu par le broyage mécanique d'une combinaison de Na₂S, S, et P ou d'une combinaison de Na₂S et PₓS_{y} où x et y représentent indépendamment un nombre entier qui donne un rapport stoechiométrique.

4. Mélange de cathode selon l'une quelconque des revendications 1 à 3,
dans lequel le composant (B) est présent en une quantité de 40% en poids ou plus de la quantité totale des composants (A), (B), et (C).

5. Mélange de cathode selon la revendication 3 ou 4,
dans lequel le composite de Na, S, et P est obtenu par le broyage mécanique de la combinaison de Na₂S, S, et P ou de la combinaison de Na₂S et PₓS_{y}, et en outre d'au moins un sélectionné dans le groupe constitué de M_{z}S_{w} où M représente Si, Ge, B, ou Al, et z et w représentent indépendamment un nombre entier qui donne un rapport stoechiométrique, du pentoxyde de diphosphore, de l'oxyde de sodium, et de l'iodure de sodium.

6. Mélange de cathode selon l'une quelconque des revendications 1 à 5,
dans lequel le composant (C) comprend en outre au moins un matériau conducteur (C2) sélectionné dans le groupe constitué du graphite, du noir d'acétylène, d'un nanotube de carbone, et d'une fibre de carbone.

7. Batterie au sodium-soufre entièrement à l'état solide, comprenant :
une couche de mélange de cathode comprenant le mélange de cathode selon l'une quelconque des revendications 1 à 6 ;
une couche d'électrolyte solide ;
une anode ; et
un collecteur de courant.
